# EUROPÄISCHE PATENTSCHRIFT

(11) **EP 1 760 409 B1**
(45) Veröffentlichungstag und Bekanntmachung des Hinweises auf die Patenterteilung: **17.08.2016**
(21) Anmeldenummer: 06017602.1
(22) Anmeldetag: 24.08.2006
(51) Int. Cl.: F24D 3/14, F24D 5/00, F24D 5/10

(54) **Bodenelement zum Erstellen von Hohlraumböden mit Heizrohren einer Raumheizung oder mit Heiz- und Kühlrohren einer kombinierten Raumheizung und Raumkühlung**
floor element for the fabrication of cavity floors with heating pipes for room heating or with heating and cooling pipes for combined room heating and cooling
Element de plancher pour la fabrication de planchers creux avec des tuyaux de chauffage pour le chauffage de locaux ou avec des tuyaux de chauffage et de refroidissement pour le chauffage et le refroidissement des locaux

(30) Priorität: 01.09.2005 DE 102005041405
(43) Veröffentlichungstag der Anmeldung: 07.03.2007
(73) Patentinhaber: Schütz GmbH & Co. KGaA, 56242 Selters / Westerwald (DE)
(72) Erfinder:
(74) Vertreter: advotec.

(56) Entgegenhaltungen:
- DE-A1- 2 241 836
- DE-A1- 3 108 106
- DE-A1- 3 217 498
- DE-A1- 10 043 288
- DE-C1- 3 329 551
- DE-C1- 10 103 001
- FR-A1- 2 662 785

## Beschreibung

Die Erfindung betrifft ein Bodenelement nach dem Oberbegriff des Anspruchs 1.

Flächenheizungen, insbesondere Fußbodenheizungen sind weit verbreitet. Aus der Zeitschrift "Elektrizitätswirtschaft", Jahrgang 68 (1969), Heft 1, Seite 9 ist ein Fußbodenheizungssystem in Trockenbauweise bekannt, bei dem elektrische Heizkabel in Kanälen verlegt sind.

Ferner sind aus der DE 30 14 390 A1 entsprechende Fußbodenheizungen mit wasserführenden Heizrohren bekannt.

Die bekannten Fußbodenheizungen haben den Nachteil, dass sie eine gewisse Trägheit in ihrer Regelbarkeit aufweisen. Deshalb werden zur Einhaltung der gewünschten Raumtemperaturen häufig zusätzlich thermostatisch regelbare Direktheizungen installiert. Die im Fußboden installierte Heizleistungen dient dann also lediglich der Deckung des Grundwärmebedarfs. Die Installation einer zusätzlichen Direktheizung ist mit hohem Aufwand verbunden, insbesondere da diese im Falle einer Flüssigkeitsheizung in der Regel mit höher temperiertem Wasser als die Fußbodenheizung betrieben werden muss. Nachteilig stellt sich ferner bei Fußbodenheizungen im Bereich von Fenstern und Türen ein sogenannter Kaltluftvorhang ein. Weiterhin ergibt sich nachteilig eine ungleichmäßige Wärmeverteilung auf der Fußbodenoberfläche. Die Temperatur erreicht jeweils an den Stellen, an denen ein Heizelement im Fußboden angeordnet ist, ein Maximum, und sie fällt im Bereich zwischen zwei Heizelementen auf ein Minimum ab.

Diese Nachteile werden durch kombinierte Raumheizungen und Raumkühlungen der gattungsgemäßen Art vermieden (Prospekt der Firma Schütz EHT GmbH & Co. KG, Ausgabe 1999). Bei den bekannten kombinierten Raumheizungen und Raumkühlungen wird auf einen Rohbetonboden eine Trittschall-Wärmedämmung aufgebracht, auf der Bodenelemente verlegt werden, die aus vakuumverformten Nocken-Kegel-Distanzplatten bestehen, auf deren Oberseite Rohrschlangen von Heiz- bzw. Kühlkreisen fixiert-werden, die entsprechend der gewünschten Raumtemperatur und in Abhängigkeit von der jeweiligen Außentemperatur über Rohrverteiler durch Regler an eine Warm- oder Kühlwasseranlage angeschlossen werden. Auf die Oberseite der Bodenelemente wird eine Estrichschicht aufgebracht, in der die Rohrschlangen eingebettet werden, und die Estrichschicht erhält einen Fliesen- oder Teppichbelag. Auf der Unterseite der Bodenelemente entsteht durch die Kegel ein Hohlraumboden, durch den Luft geleitet wird, die durch die von Warm- bzw. Kaltwasser durchströmten Rohrschlangen erwärmt bzw. gekühlt wird. Die warme bzw. kalte Luft tritt je nach Raumgröße über einen oder mehrere nach oben offene, durch Gitter abgedeckte Luftauslassschächte im Fußboden in den Gebäuderaum ein.

Einen entscheidender Nachteil der bekannten kombinierten Raumheizung und Raumkühlung besteht darin, dass beim Verlegen der Bodenelemente auf einem Rohbetonboden oder einer auf einem Rohbetonboden aufgebrachten Trittschalldämmung Verunreinigungen in dem Hohlraumboden zurückbleiben, die bei Betrieb der kombinierten Raumheizung und Raumkühlung über längere Zeit mit dem durch den Hohlraumboden geleiteten Warm- oder Kaltluftstrom als Staubpartikel in die Gebäuderäume gelangen, eine Verschmutzung der Räume verursachen und im ungünstigsten Fall sogar gesundheitliche Schäden bei Personen herbeiführen können, die sich länger in den Gebäuderäumen aufhalten.

Ein weiteres in der DE 101 03 001 C1 beschriebenes Bodenelement der gattungsgemäßen Art weist eine Oberplatte mit Halteelementen auf der Plattenoberseite zum Verlegen von Rohrschlangen und Stütz- und Distanzelementen auf der Plattenunterseite sowie eine mit den Stütz- und Distanzelementen der Oberplatte verschweißte Unterplatte zur Ausbildung eines Durchströmraumes bzw. Durchströmkanals für einen in einen Gebäuderaum einzuleitenden Luftstrom auf, der beim Durchströmen durch den Hohlraum eines aus den Bodenelementen erstellten Hohlraumbodens durch die Heiz- bzw. Kühlrohre des Hohlraumbodens erwärmt bzw. abgekühlt wird. Dieses bekannte Bodenelement gewährleistet das Verlegen von Hohlraumböden, deren Luftdurchtrittsraum unabhängig von dem jeweiligen Zustand des Unterbodens gegen das Eindringen von Bauschmutz geschützt ist.

Nach VDI-Vorschriften müssen aus Bodenelementen der gattungsgemäßen Art erstellte Hohlraumböden von Raumheizungen und kombinierten Raumheizungen und Raumkühlungen in regelmäßigen Abständen gereinigt werden, um eine gesundheitsgefährdende Verschmutzung der Raumluft zu vermeiden.

Aus der DE 31 08 106 A1 ist ein Metallblech zur Anordnung in einem Bodenestrich bekannt, wobei das im Wesentlichen flächig ausgebildete Metallleitblech gleichzeitig zur Ausbildung von Rohren dient.

Die DE 100 43 288 A1 zeigt ein Bodenelement, das aus Kunststoff ausgebildet ist, mit einer Oberwand und einer Unterwand, die sich in Stützstellen aufeinander abstützen, wobei auf der Oberwand Rohrschlangen verlegt sind.

Aus der DE 22 41 836 A1 ist eine Luftführungs-Rohrbatterie bekannt, in der durch eine Anordnung von profilierten Platten Luftführungskanäle ausgebildet werden. Die einzelnen Luftführungskanäle weisen einen annähernd rechteckförmigen Querschnitt auf, wobei auf der Oberwand und zwischen Seitenwänden benachbarter Luftführungskanäle eine Ausgleichsschicht aufgebracht ist, die sich kraftschlüssig in den Bereichen zwischen den Seitenwänden auf der Unterwand abstützt.

Die Bodenelemente nach den Stand der Technik haben den Nachteil, dass die aus diesen Bodenelementen erstellten Hohlraumböden wegen der in den Hohlraum hineinragenden Kegel, die auf der Unterseite der als Kunststoffplatten ausgebildeten Bodenelemente angeordnet sind und zum Abstützen der Platten auf einem Gehäuseboden und zur Bildung der Hohlraumböden dienen, nur umständlich und unzureichend gereinigt werden können.

Der Erfindung liegt die Aufgabe zugrunde, dass gattungsgemäße Bodenelement zum Erstellen von Hohlraumböden von Raumheizungen und kombinierten Raumheizungen und Raumkühlungen im Hinblick auf eine optimale Reinigungsmöglichkeit der Hohlraumböden weiterzuentwickeln.

Diese Aufgabe wird erfindungsgemäß gelöst durch ein Bodenelement mit den Merkmalen des Patentanspruchs 1.

Die Unteransprüche beinhalten vorteilhafte und zweckmäßige Weiterbildungen der Erfindung.

Das erfindungsgemäße Bodenelement zeichnet sich durch folgende Vorteile aus:
Die aus dem Bodenelement erstellten Hohlraumböden für Raumheizungen und kombinierte Raumheizungen und Raumkühlungen weisen eine Struktur aus einer Vielzahl von parallel nebeneinander angeordneten Luftkanälen aus Blech auf, die einfach und schnell gereinigt werden können. Ferner besitzt das Bodenelement eine große Wärmeaustauschfläche, die eine optimale Erwärmung oder Kühlung der durch die Luftkanäle eines Hohlraumbodens strömenden Luft durch das Warm- bzw. Kühlwasser ermöglicht, das durch die auf den Bodenelemente verlegten Rohrschlangen von als Heiz- oder Kühlkreise betriebenen Rohrkreisläufen strömt.

Die Erfindung ist nachstehend von Zeichnungsfiguren erläutert, die folgendes darstellen:
- Fig.1: eine ausschnittsweise, schematische, perspektivische Darstellung eines Hohlraumbodens mit einem Bodenelement zum Verlegen von Rohrschlangen und
- Fig. 2: eine vergrößerte, schematische Querschnittdarstellung nach Linie II-II der Fig. 1.

Auf dem Rohbetonboden 2 des Fußbodens 1 eines mit einer kombinierten Raumheizung und Raumkühlung ausgestatteten, nicht dargestellten Gebäuderaums sind eine Trittschalldämmung 3 und eine Wärmedämmung 4 aufgebracht, auf denen Bodenelemente 5 eines Hohlraumbodens 6 zur Aufnahme der Rohrschlangen 7 von bedarfsweise als Heiz- oder Kühlkreise betreibbaren Rohrkreisläufen einer kombinierten Raumheizung und Raumkühlung verlegt sind.

Auf die Bodenelemente 5 mit den Rohrschlangen 7 ist eine Estrichschicht 8 aufgebracht, die mit einem Teppichbodenbelag, einem Fliesenbelag oder Parketthölzern versehen werden kann.

Das Bodenelement 5 ist als Luftkanal 9 mit Rechteckquerschnitt ausgebildet und weist zwei Seitenwände 10, 11, eine Oberwand 12 und eine Unterwand 13 sowie eine Eintritts- und eine Austrittsöffnung 14, 15 für Frischluft und/oder Umluft auf, und die Oberwand 12 des Luftkanals 9 besitzt eine oberseitige Struktur mit tiefgezogenen und/oder gepressten, als Klemmnocken ausgebildeten Halteelementen 16 zum Fixieren der Rohrschlangen 7. An die Lufteintrittöffnung 14 des Luftkanals 9 des Bodenelements 5 ist ein Einblasmodul 17 und an die Luftaustrittsöffnung 15 des Luftkanals 9 ein Ausblasmodul 18 anschließbar.

Das Bodenelement 5 wird aus verzinktem Blech hergestellt.

Die Heiz- bzw. Kühlkreise der mit dem Bodenelement erstellten kombinierten Raumheizung und Raumkühlung werden entsprechend der jeweils gewünschten Raumtemperatur und in Abhängigkeit von der jeweiligen Außentemperatur über Rohrverteiler und Regler an eine Warm- und/oder Kühlwasseranlage angeschlossen.

Die durch die Luftkanäle 9 des Hohlraumbodens 6 geförderte Frisch- und/oder Umluft wird durch die von Warm- bzw. Kaltwasser durchströmten Rohrschlangen 7 erwärmt bzw. gekühlt und durch einen oder mehrere bevorzugt im Bereich von Fenstern in den Fußboden eingelassene Luftausblaskästen in den Gebäuderaum eingeblasen. Die Abluft wird über eine oder mehrere Luftaustrittsöffnungen im Deckenbereich und Abluftleitungen aus dem Gebäuderaum abgesaugt.

Bei Heizbetrieb der kombinierten Raumheizung und Raumkühlung wird die benötigte Wärmeleistung im wesentlichen durch die Fußbodenheizung erbracht. Die Luftkanäle des Hohlraumbodens wirken wie ein Nachheizregister zum Erwären der durch die Kanäle strömenden Frisch- und/oder Umluft, die als Zuluft in den Gebäuderaum eintritt und zur Heizleistung beiträgt.

Bei Kühlbetrieb der kombinierten Raumheizung und Raumkühlung wird die Kühlleistung der Raumkühlung durch die temperierte Fläche des Fußbodens, die durch die von Kaltwasser durchströmten Rohrschlangen der Kühlkreise gekühlt wird, und durch die beim Durchströmen durch die Luftkanäle des Hohlraumbodens gekühlte Frisch- und/oder Umluft erbracht.

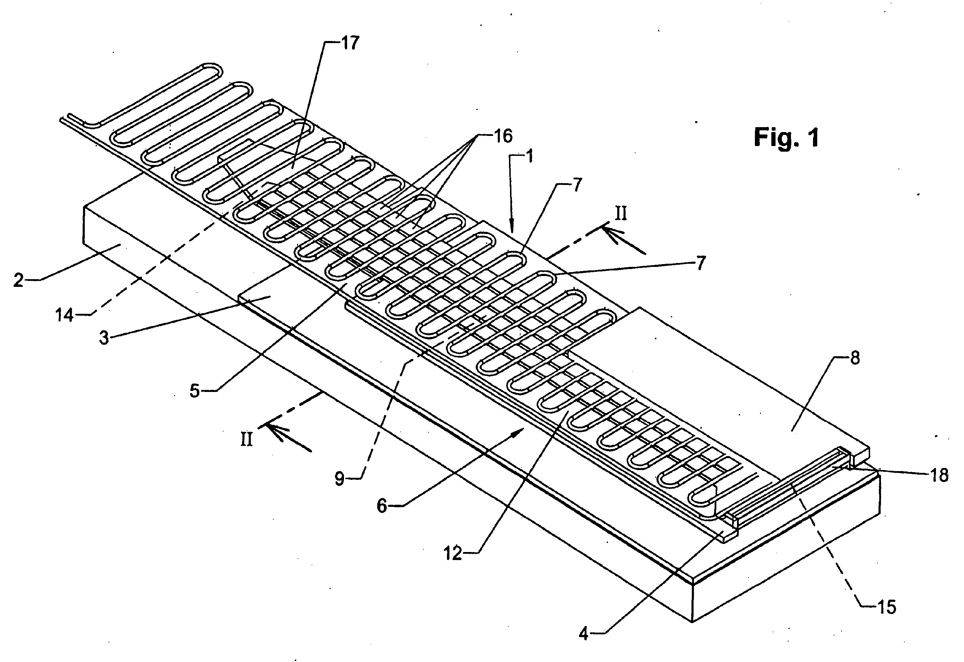

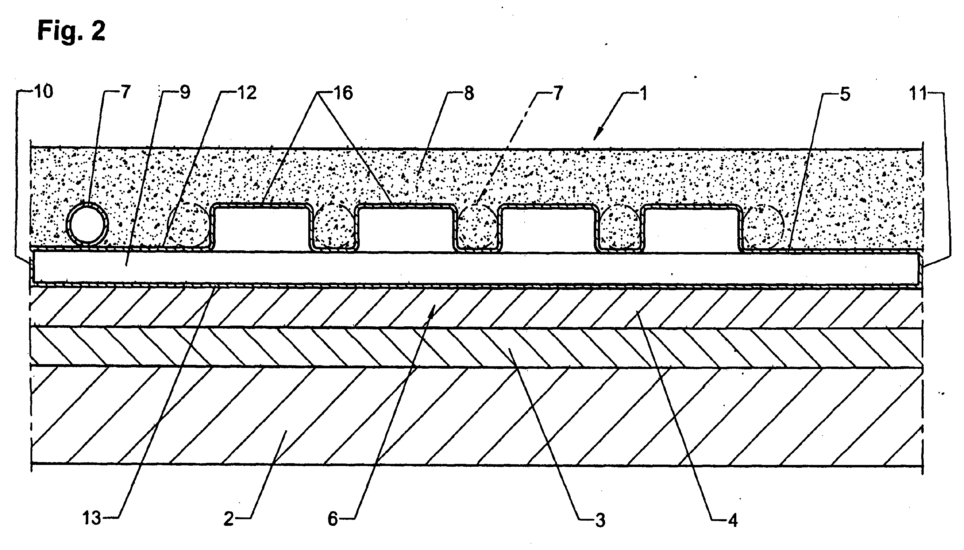

Die Figur 2 zeigt in strichpunktierten Linien eine weitere Verlegungsmöglichkeit der Rohrschlangen 7 auf einem Bodenelement 5 in einer gegenüber der Darstellung in Figur 1 um 90° verdrehten Position.

## Patentansprüche

1. Bodenelement zum Erstellen von Hohlraumböden mit Heizrohren einer Raumheizung oder nit Heiz- und Kühlrohren einer kombinierten Raumheizung und Raumkühlung, mit an der Oberseite angeformten Halteelementen zum Verlegen der Rohrschlangen von als Heiz- oder Kühlkreise betreibbaren Rohrkreisläufen einer Raumheizung oder einer kombinierten Raumheizung und Raumkühlung sowie mit einem Hohlraum, durch den ein Frischluft- und/oder Umluftstrom zur Erwärmung oder Kühlung durch die Fußbodenheizung bzw. Fußbodenkühlung in einen Gebäuderaum geleitet wird, wobei das Bodenelement (5) als Luftkanal (9) mit einer Eintritts- und einer Austrittsöffnung (14, 15) für Frischluft und/oder Umluft ausgebildet ist, **dadurch gekennzeichnet, dass** das Bodenelement aus Blech mit zwei Seitenwänden (10, 11), einer Oberwand (12) und einer Unterwand (13) gebildet ist, wobei die zwei Seitenwände, die Oberwand und die Unterwand einen rechteckförmigen Querschnitt ausbilden, und die Oberwand (12) des Luftkanals (9) eine oberseitige Struktur mit tiefgezogenen und/oder gepressten Haltelementen (16) zum Fixieren von Rohrschlangen (7) aufweist.

2. Bodenelement nach Anspruch 1, **dadurch gekennzeichnet, dass** die Halteelemente (16) desselben (5) als Klemmnocken ausgebildet sind.

3. Bodenelement nach Anspruch 1 oder 2, **gekennzeichnet durch** ein an die Lufteintrittsöffnung (14) anschließbares Einblasmodul (17) und ein an die Luftaustrittsöffnung (15) anschließbares Ausblasmodul (18).

4. Bodenelement nach einem der Ansprüche 1 bis 3, **dadurch gekennzeichnet, dass** dieses (5) aus verzinktem Blech hergestellt ist.

## Claims

1. A floor element for constructing hollow floors with heating tubes of a space heating system or with heating and cooling tubes of a combined space heating and space cooling system, the floor element comprising support elements formed integrally on the upper side for laying the tube coils of tube circuits of a space heating system or a combined space heating and space cooling system, the tube circuits being operable as heating or cooling circuits, and comprising a hollow space through which a fresh-air and/or circulating-air stream is conducted into a building space for the purpose of heating or cooling by means of the floor heating system or floor cooling system, the floor element (5) being realized as an air duct (9) having an inlet opening and an outlet opening (14, 15) for fresh air and/or circulating air,
**characterized in that**
the floor element is made of metal sheet and comprises two side walls (10, 11), an upper wall (12) and a lower wall (13), the two side walls, the upper wall and the lower wall forming a rectangular cross-section, and the upper wall (12) of the air duct (9) having a top-side structure comprising deep-drawn and/or pressed support elements (16) for fixing tube coils (7).

2. The floor element according to claim 1,
**characterized in that**
the support elements (16) of the floor element (5) are realized as clamping ribs.

3. The floor element according to claim 1 or 2,
**characterized by**
an air injection module (17) connectable to the air inlet opening (14) and by an exhaust module (18) connectable to the air outlet opening (15).

4. The floor element according to any one of claims 1 to 3, **characterized in that**
the floor element (5) is manufactured from galvanized metal sheet.

## Revendications

1. Élément de plancher pour assembler des planchers creux comportant des tubes de chauffage d'un chauffage de locaux ou comportant des tubes de chauffage et de refroidissement d'un système combiné de chauffage et refroidissement de locaux, l'élément de plancher comprenant des éléments de support pour poser les serpentins des circuits de tubes d'un chauffage de locaux ou d'un système combiné de chauffage et refroidissement de locaux, les circuits de tubes étant utilisables comme circuits de chauffage ou de refroidissement, et comprenant une cavité par laquelle un débit d'air frais et/ou d'air circulant est conduit dans une pièce de bâtiment aux fins de l'échauffement ou du refroidissement par le plancher chauffant ou le plancher refroidissant, l'élément de plancher (5) étant réalisé comme conduit d'air (9) présentant une ouverture d'entrée et une ouverture de sortie (14, 15) pour l'air frais et/ou l'air circulant,
**caractérisé en ce que**
l'élément de plancher est fabriqué en tôle et comprend deux parois latérales (10, 11), une paroi supérieure (12) et une paroi inférieure (13), les deux parois latérales, la paroi supérieure et la paroi inférieure formant une section transversale rectangulaire, et la paroi supérieure (12) du conduit d'air (9) présentant une structure de côté supérieur comprenant des éléments de support (16) emboutis et/ou pressés destinés à fixer des serpentins (7).

2. Élément de plancher selon la revendication 1,
**caractérisé en ce que**
les éléments de support (16) de l'élément de plancher (5) sont réalisés comme nervures de serrage.

3. Élément de plancher selon la revendication 1 ou 2,
**caractérisé par**
un module d'injection d'air (17) étant connectable à l'ouverture d'entrée d'air (14) et un module d'évacuation (18) étant connectable à l'ouverture de sortie d'air (15).

4. Élément de plancher selon l'une quelconque des revendications 1 à 3,
**caractérisé en ce que**
l'élément de plancher (5) est fabriqué en tôle zinguée.
